# EUROPEAN PATENT APPLICATION

(11) **EP 4 538 844 A1**
(43) Date of publication of application: **16.04.2025**
(21) Application number: 23818959.1
(22) Date of filing: 26.05.2023
(51) Int. Cl.: G06F 3/0485, G06F 3/0482, G10L 15/26

(54) **AUDIO TRACK MARKING METHOD AND ELECTRONIC DEVICE**

(30) Priority: 06.06.2022 CN 202210633882
(71) Applicant: Huawei Technologies Co., Ltd., Shenzhen, Guangdong 518129 (CN)
(72) Inventor: XIAO, Dong, Shenzhen, Guangdong 518129 (CN)
(74) Representative: Grünecker Patent- und Rechtsanwälte PartG mbB
(86) International application number: PCT/CN2023/096664
(87) International publication number: WO 2023/236794

(57) **Abstract**

This application provides an audio track marking method and an electronic device. **In** the method, during recording or playing of audio, an electronic device displays an audio track of the audio on a display. The electronic device displays, in a first display style in response to a first operation triggered by a user, a first position corresponding to the first operation in the audio track. The first operation indicates to mark the first position in the audio track. According to this solution, the electronic device may display, in the first display style, the first position on which marking is triggered by the user in the audio track, to quickly mark a key audio position in the audio track. This facilitates searching for key audio at any time by the user and improves user experience.

## Description

### CROSS-REFERENCE TO RELATED APPLICATIONS

This application claims priority to Chinese Patent Application No. 202210633882.X, filed with the China National Intellectual Property Administration on June 6, 2022 and entitled "AUDIO TRACK MARKING METHOD AND ELECTRONIC DEVICE", which is incorporated herein by reference in its entirety.

### TECHNICAL FIELD

This application relates to the field of terminal technologies, and in particular, to an audio track marking method and an electronic device.

### BACKGROUND

Speech transcription is a technology that converts speech content in audio into a text, and is widely applied to conference scenarios and online learning scenarios. For example, when speech transcription is applied to a conference scenario, a conference recording may be transcribed, to convert speech content of a conference into a text. This facilitates recording and viewing of conference content.

However, when a user needs to confirm or mark a segment of speech transcription content, the user needs to repeatedly listen to a recording to locate a corresponding speech. This is complex to operate and inefficient.

### SUMMARY

This application provides an audio track marking method and an electronic device, to provide a method for quickly marking key content in an audio track.

According to a first aspect, this application provides an audio track marking method. The method may be executed by an electronic device, and the method includes: during recording or playing of audio, displaying an audio track of the audio on a display; and displaying, in a first display style in response to a first operation triggered by a user, a first position corresponding to the first operation in the audio track, where the first operation indicates to mark the first position in the audio track.

Based on the foregoing method, during recording or playing of the audio, the electronic device displays the audio track of the audio on the display, and the user may trigger the first operation at any time. The electronic device may display, in the first display style, the first position corresponding to the first operation in the audio track, to quickly mark a key audio position in the audio track. This facilitates searching for key audio at any time by the user and improves user experience.

In a possible design, after the displaying, in a first display style in response to a first operation triggered by a user, a first position corresponding to the first operation in the audio track, the method further includes: displaying, in the first display style in response to a second operation triggered by the user, a first area between the first position and a second position corresponding to the second operation in the audio track, where the second operation indicates to end marking at the second position in the audio track, and the second position is after the first position.

According to this design, the electronic device may determine the first area in the audio track based on the first operation and the second operation that are triggered by the user, and display the first area in the first display style, to mark an area corresponding to the key audio in the audio track. This facilitates searching for the key audio at any time by the user.

In a possible design, the first display style includes at least one of the following: a background color different from that of a default display style of the audio track; an audio track shape different from that of the default display style of the audio track; and an audio track color different from that of the default display style of the audio track.

In a possible design, the method further includes: performing speech transcription on the audio, and displaying speech transcription content corresponding to the audio; and displaying, in a second display style, speech transcription content corresponding to the first position in the speech transcription content. The speech transcription content corresponding to the first position may be speech transcription content of audio corresponding to an audio track area of a preset length that includes the first position, and the first position may be a start position, an end position, or a middle position of the audio track area.

In a possible design, the method further includes: performing speech transcription on the audio, and displaying speech transcription content corresponding to the audio; and displaying, in a second display style, speech transcription content corresponding to the first area in the speech transcription content. The speech transcription content corresponding to the first area includes speech transcription content of audio corresponding to the first area.

According to the foregoing design, the electronic device may further mark the speech transcription content corresponding to the first position or the first area that is marked by the user, so that key content can be highlighted. This facilitates viewing by the user.

In a possible design, the second display style includes at least one of the following: a font different from that of a default display style of the speech transcription content; a text color different from that of the default display style of the speech transcription content; and a background color different from that of the default display style of the speech transcription content.

In a possible design, the method further includes: in response to a third operation triggered by the user, adding an annotation area at a third position corresponding to the third operation; and displaying an annotation editing interface on the display, receiving annotation content entered by the user in the annotation editing interface, and displaying the annotation content in the annotation area.

According to this design, the electronic device may display, at the third position in response to the third operation triggered by the user, an annotation entered by the user, to annotate the key content. This facilitates searching for audio content or speech transcription content by the user.

In a possible design, the method further includes: displaying, in a third display style, an area corresponding to the third position in the audio track.

In a possible design, the displaying an annotation editing interface on the display includes: displaying a speech transcription interface and the annotation editing interface on the display in split screen mode; or displaying a floating window in a speech transcription interface displayed on the display, and displaying the annotation editing interface in the floating window, where the speech transcription interface includes the audio track of the audio and the speech transcription content corresponding to the audio.

According to this design, the electronic device may display the annotation editing interface in split screen mode or display the annotation editing interface in the floating window, to flexibly receive the annotation content entered by the user.

In a possible design, the method further includes: displaying a speech transcription interface and a minutes editing interface on the display in split screen mode, where the speech transcription interface includes the audio track of the audio and the speech transcription content corresponding to the audio, and the minutes editing interface includes target speech transcription content and/or a play control corresponding to the target speech transcription content; and the target speech transcription content includes speech transcription content corresponding to a marked audio track area and/or speech transcription content corresponding to an annotated audio track area in the audio track, and the play control corresponding to the target speech transcription content is used to play an audio clip corresponding to the target speech transcription content.

According to this design, the electronic device may alternatively display the speech transcription interface and the minutes editing interface in split screen mode. The minutes editing interface may include the speech transcription content corresponding to the marked audio track area and/or the speech transcription content corresponding to the annotated audio track area, so that the user can directly use the content to edit minutes. This facilitates a user operation and improves user experience. In addition, the minutes editing interface may further include the play control corresponding to the target speech transcription content. The user may repeatedly listen to audio content corresponding to the marked audio track area at any time by tapping the play control. This improves user experience.

In a possible design, when the audio track includes a plurality of marked audio track areas, the plurality of marked audio track areas correspond to at least one display style, and the at least one display style is user-defined.

For example, audio track areas on which marking is triggered by different users correspond to different display styles.

In a possible design, the method further includes: in response to a movement operation triggered by the user on a sliding control in a display interface, adjusting, based on a distance corresponding to the movement operation, speech transcription content displayed in the display interface.

According to a second aspect, this application provides an electronic device. The electronic device includes a plurality of functional modules, and the plurality of functional modules interact with each other to implement the method shown in the first aspect and the implementations of the first aspect. The plurality of functional modules may be implemented based on software, hardware, or a combination of software and hardware, and the plurality of functional modules may be randomly combined or divided based on specific implementation.

According to a third aspect, this application provides an electronic device that includes at least one processor and at least one memory, where the at least one memory stores computer program instructions, and when the electronic device is run, the at least one processor performs the method shown in the first aspect and the implementations of the first aspect.

According to a fourth aspect, this application further provides a computer program product that includes instructions. When the computer program product is run on a computer, the computer is enabled to perform the method shown in the first aspect and the implementations of the first aspect.

According to a fifth aspect, this application further provides a computer-readable storage medium. The computer-readable storage medium stores a computer program, and when the computer program is executed by a computer, the computer is enabled to perform the method shown in the first aspect and the implementations of the first aspect.

According to a sixth aspect, this application further provides a chip, and the chip is configured to read a computer program stored in a memory, to perform the method shown in the first aspect and the implementations of the first aspect.

According to a seventh aspect, this application further provides a chip system. The chip system includes a processor, configured to support a computer apparatus in implementing the method shown in the first aspect and the implementations of the first aspect. In a possible design, the chip system further includes a memory, and the memory is configured to store a program and data that are necessary for the computer apparatus. The chip system may include a chip, or may include a chip and another discrete component.

### BRIEF DESCRIPTION OF DRAWINGS

FIG. 1 is a diagram of a structure of an electronic device according to an embodiment of this application;
FIG. 2 is a block diagram of a software structure of an electronic device according to an embodiment of this application;
FIG. 3 is a diagram of a display interface in which an electronic device displays an audio track of audio according to an embodiment of this application;
FIG. 4 is a diagram in which a user triggers a first operation according to an embodiment of this application;
FIG. 5 is a diagram in which a first position mark is displayed according to an embodiment of this application;
FIG. 6 is a diagram in which an audio track is displayed according to an embodiment of this application;
FIG. 7 is a diagram in which speech transcription content corresponding to a first position is marked according to an embodiment of this application;
FIG. 8 is a diagram in which speech transcription content corresponding to a first area is marked according to an embodiment of this application;
FIG. 9 is a diagram of an interface in which speech transcription is performed on audio according to an embodiment of this application;
FIG. 10 is a diagram in which an audio track that includes a plurality of marked audio track areas is displayed according to an embodiment of this application;
FIG. 11 is a diagram of a first annotation editing interface according to an embodiment of this application;
FIG. 12 is a diagram of another annotation editing interface according to an embodiment of this application;
FIG. 13 is a diagram in which an annotation is displayed above an audio track according to an embodiment of this application;
FIG. 14 is a diagram of a mark display style according to an embodiment of this application;
FIG. 15 is a diagram in which an annotation above an audio track is displayed according to an embodiment of this application;
FIG. 16 is a diagram of an interface in which speech transcription content is edited according to an embodiment of this application;
FIG. 17 is a diagram in which a minutes editing interface is displayed according to an embodiment of this application;
FIG. 18 is a diagram in which another minutes editing interface is displayed according to an embodiment of this application;
FIG. 19 is a diagram in which speech transcription content is displayed according to an embodiment of this application;
FIG. 20 is a diagram of a first audio track display manner according to an embodiment of this application;
FIG. 21 is a diagram of another audio track display manner according to an embodiment of this application; and
FIG. 22 is a flowchart of an audio track marking method according to an embodiment of this application.

### DESCRIPTION OF EMBODIMENTS

To make the objectives, technical solutions, and advantages of embodiments of this application clearer, the following further describes embodiments of this application in detail with reference to the accompanying drawings. The terms "first" and "second" below in the description of embodiments of this application are merely used for a description purpose, and shall not be understood as an indication or implication of relative importance or implicit indication of a quantity of indicated technical features. Therefore, a feature limited by "first" or "second" may explicitly or implicitly include one or more features.

It should be understood that in embodiments of this application, "at least one" means one or more, and "a plurality of" means two or more. The term "and/or" describes an association relationship of associated objects, and indicates that three relationships may exist. For example, A and/or B may indicate the following three cases: Only A exists, both A and B exist, and only B exists. A and B may be singular or plural. The character "/" generally indicates an "or" relationship between associated objects. The expression "at least one of the following items (pieces)" or a similar expression means any combination of these items, including a single item (piece) or any combination of a plurality of items (pieces). For example, at least one item (piece) of a, b, or c may represent: a, b, c, a and b, a and c, b and c, or a, b, and c, where a, b, and c may be singular or plural.

Speech transcription is a technology that converts speech content in audio into a text, and is widely used in conference scenarios and online learning scenarios. For example, when speech transcription is applied to a conference scenario, a conference recording may be transcribed, to convert speech content of a conference into a text. This facilitates recording and viewing of conference content.

However, when a user needs to check or mark a segment of speech transcription content, the user needs to repeatedly listen to the recording to locate a corresponding speech. This is complex to operate and inefficient.

Based on the foregoing problem, this application provides an audio track marking method, to provide a method for quickly marking key content in an audio track.

The audio track marking method provided in embodiments of this application may be applied to an electronic device. The following describes the electronic device, and embodiments in which the electronic device is used. The electronic device in embodiments of this application may be, for example, a tablet computer, a mobile phone, a vehicle-mounted device, an augmented reality (augmented reality, AR)/virtual reality (virtual reality, VR) device, a notebook computer, an ultra-mobile personal computer (ultra-mobile personal computer, UMPC), a netbook, a personal digital assistant (personal digital assistant, PDA), a wearable device, an internet of things (internet of thing, IoT) device, or a head unit. A specific type of the electronic device is not limited in embodiments of this application. In some embodiments, the electronic device may support a stylus.

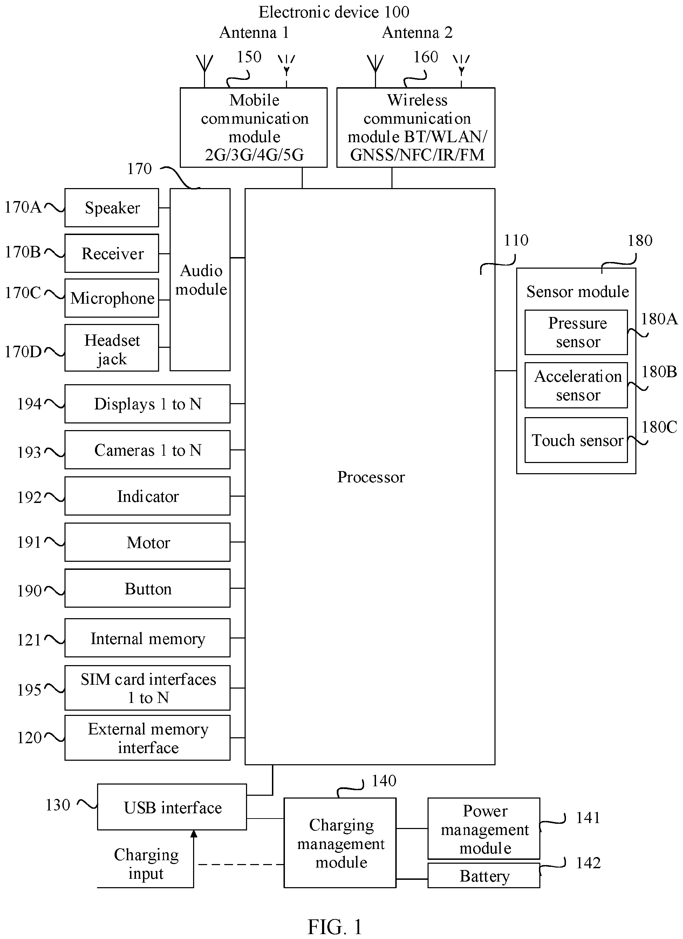

FIG. 1 is a diagram of a structure of an electronic device 100 according to an embodiment of this application. As shown in FIG. 1, the electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors. The controller may be a nerve center and a command center of the electronic device 100. The controller may generate an operation control signal based on instruction operation code and a time sequence signal, to complete control of instruction fetch and instruction execution. A memory may be further disposed in the processor 110, and is configured to store instructions and data. In some embodiments, the memory in the processor 110 is a cache. The memory may store instructions or data just used or cyclically used by the processor 110. If the processor 110 needs to use the instructions or the data again, the processor may directly invoke the instructions or the data from the memory. This avoids repeated access, reduces waiting time of the processor 110, and improves system efficiency.

The USB interface 130 is an interface that conforms to a USB standard specification, and may be specifically a mini USB interface, a micro USB interface, a USB Type-C interface, or the like. The USB interface 130 may be configured to connect to a charger to charge the electronic device 100, or may be configured to transmit data between the electronic device 100 and a peripheral device. The charging management module 140 is configured to receive a charging input from a charger. The power management module 141 is configured to connect to the battery 142, the charging management module 140, and the processor 110. The power management module 141 receives an input from the battery 142 and/or an input from the charging management module 140, and supplies power to the processor 110, the internal memory 121, an external memory, the display 194, the camera 193, the wireless communication module 160, and the like.

A wireless communication function of the electronic device 100 may be implemented through the antenna 1, the antenna 2, the mobile communication module 150, the wireless communication module 160, the modem processor, the baseband processor, and the like. The antenna 1 and the antenna 2 are configured to transmit and receive an electromagnetic wave signal. Each antenna in the electronic device 100 may be configured to cover one or more communication frequency bands. Different antennas may be further reused, to improve antenna utilization. For example, the antenna 1 may be reused as a diversity antenna of a wireless local area network. In some other embodiments, the antenna may be used in combination with a tuning switch.

The mobile communication module 150 may provide a wireless communication solution that includes 2G/3G/4G/5G or the like and that is applied to the electronic device 100. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit a processed electromagnetic wave to the modem processor for demodulation. The mobile communication module 150 may further amplify a signal modulated by the modem processor, and convert an amplified signal into an electromagnetic wave for radiation through the antenna 1. In some embodiments, at least some functional modules of the mobile communication module 150 may be disposed in the processor 110. In some embodiments, at least some functional modules in the mobile communication module 150 may be disposed in a same component as at least some modules in the processor 110.

The wireless communication module 160 may provide a wireless communication solution that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like and that is applied to the electronic device 100. The wireless communication module 160 may be one or more components integrating at least one communication processing module. The wireless communication module 160 receives an electromagnetic wave through the antenna 2, performs frequency modulation and filtering processing on the electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, in the electronic device 100, the antenna 1 and the mobile communication module 150 are coupled, and the antenna 2 and the wireless communication module 160 are coupled, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The display 194 is configured to display a display interface of an application, for example, display a display page of an application installed on the electronic device 100. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flex light-emitting diode, FLED), a mini-LED, a micro-LED, a micro-OLED, a quantum dot light emitting diode (quantum dot light emitting diode, QLED), or the like. In some embodiments, the electronic device 100 may include one or N displays 194, where N is a positive integer greater than 1.

The camera 193 is configured to capture a static image or a video. An optical image of an object is generated through a lens, and is projected onto a photosensitive element. The photosensitive element may be a charge-coupled device (charge-coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format like RGB or YUV. In some embodiments, the electronic device 100 may include one or N cameras 193, where N is a positive integer greater than 1.

The internal memory 121 may be configured to store computer-executable program code. The executable program code includes instructions. The processor 110 runs the instructions stored in the internal memory 121, to perform various function applications of the electronic device 100 and data processing. The internal memory 121 may include a program storage area and a data storage area. The program storage area may store an operating system, software code of at least one application, and the like. The data storage area may store data (for example, a shot image or a recorded video) generated during use of the electronic device 100, and the like. In addition, the internal memory 121 may include a high-speed random access memory, or may include a nonvolatile memory, for example, at least one magnetic disk storage device, a flash memory, or a universal flash storage (universal flash storage, UFS).

The external memory interface 120 may be configured to connect to an external memory card, for example, a micro SD card, to extend a storage capability of the electronic device. The external memory card communicates with the processor 110 through the external memory interface 120, to implement a data storage function. For example, files such as an image and a video are stored in the external memory card.

The electronic device 100 may implement an audio function such as music playing or recording through the audio module 170, the speaker 170A, the receiver 170B, the microphone 170C, the headset jack 170D, the application processor, and the like.

The sensor module 180 may include a pressure sensor 180A, an acceleration sensor 180B, a touch sensor 180C, and the like.

The pressure sensor 180A is configured to sense a pressure signal, and can convert the pressure signal into an electrical signal. In some embodiments, the pressure sensor 180A may be disposed on the display 194.

The touch sensor 180C is also referred to as a "touch panel". The touch sensor 180C may be disposed on the display 194, and the touch sensor 180C and the display 194 constitute a touchscreen, which is also referred to as a "touch screen". The touch sensor 180C is configured to detect a touch operation performed on or near the touch sensor. The touch sensor may transfer the detected touch operation to the application processor to determine a type of a touch event. A visual output related to the touch operation may be provided through the display 194. In some other embodiments, the touch sensor 180C may alternatively be disposed on a surface of the electronic device 100 at a position different from that of the display 194.

The button 190 includes a power button, a volume button, and the like. The button 190 may be a mechanical button or a touch button. The electronic device 100 may receive a button input, and generate a button signal input related to a user setting and function control of the electronic device 100. The motor 191 may generate a vibration prompt. The motor 191 may be configured to provide an incoming call vibration prompt and a touch vibration feedback. For example, touch operations performed on different applications (for example, photographing and audio playing) may correspond to different vibration feedback effect. Touch vibration feedback effect may be further customized. The indicator 192 may be an indicator light, and may be configured to indicate a charging status and a power change, or may be configured to indicate a message, a missed call, a notification, and the like. The SIM card interface 195 is configured to connect to a SIM card. The SIM card may be inserted into the SIM card interface 195 or removed from the SIM card interface 195, to implement contact with or separation from the electronic device 100.

It may be understood that the components shown in FIG. 1 do not constitute a specific limitation on the electronic device 100. The electronic device may further include more or fewer components than those shown in the figure, or some components may be combined, or some components may be split, or there may be a different component arrangement. In addition, a combination/connection relationship between the components in FIG. 1 may also be adjusted and modified.

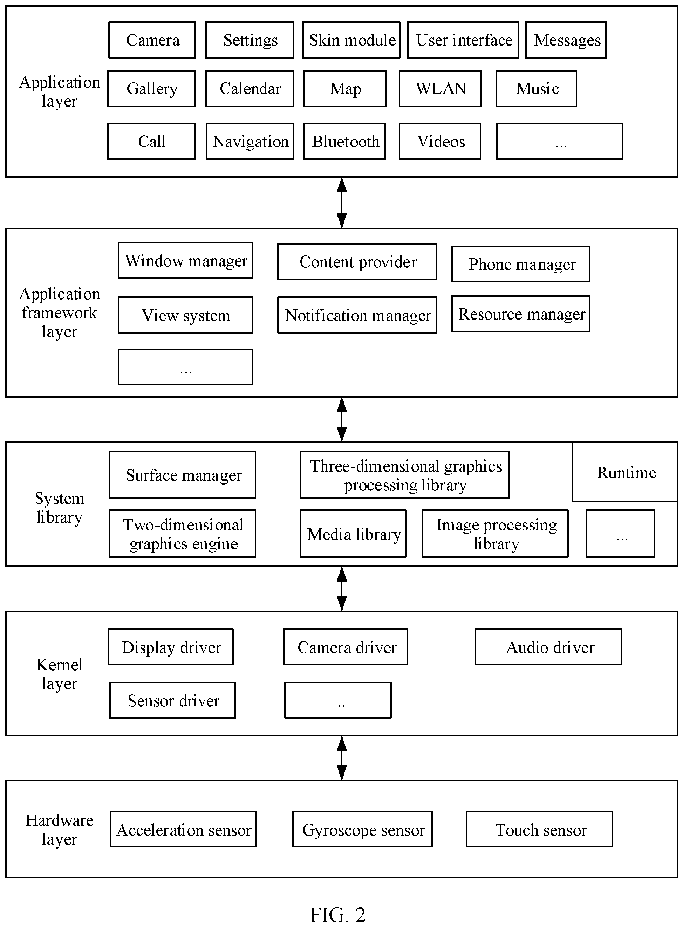

FIG. 2 is a block diagram of a software structure of an electronic device according to an embodiment of this application. As shown in FIG. 2, the software structure of the electronic device may be a layered architecture. For example, software may be divided into several layers, and each layer has a clear role and responsibility. The layers communicate with each other through a software interface. In some embodiments, an operating system is divided into four layers: an application layer, an application framework (framework, FWK) layer, a runtime (runtime) and system library, and a kernel layer from top to bottom.

The application layer may include a series of application packages (application package). As shown in FIG. 2, the application layer may include Camera, Settings, a skin module, a user interface (user interface, UI), a third-party application, and the like. The third-party application may include Gallery, Calendar, Call, Map, Navigation, WLAN, Bluetooth, Music, Videos, Messages, and the like. In this embodiment of this application, the application layer may include a target installation package that is of a target application and that the electronic device requests to download from a server, and a function file and a layout file in the target installation package are adapted to the electronic device.

The application framework layer provides an application programming interface (application programming interface, API) and a programming framework for an application at the application layer. The application framework layer may include some predefined functions. As shown in FIG. 2, the application framework layer may include a window manager, a content provider, a view system, a phone manager, a resource manager, a notification manager, and the like.

The window manager is configured to manage a window program. The window manager may obtain a size of the display, determine whether there is a status bar, perform screen locking, take a screenshot, and the like. The content provider is configured to store and obtain data, and enable the data to be accessed by an application. The data may include a video, an image, audio, calls that are made and answered, a browsing history and bookmarks, an address book, and the like.

The view system includes visual controls such as a control for displaying a text and a control for displaying an image. The view system may be configured to construct an application. A display interface may include one or more views. For example, a display interface including an SMS message notification icon may include a text display view and an image display view.

The phone manager is configured to provide a communication function for the electronic device, for example, management of a call status (including answering, declining, or the like).

The resource manager provides various resources such as a localized character string, an icon, an image, a layout file, and a video file for an application.

The notification manager enables an application to display notification information in a status bar, and may be configured to convey a notification message. The notification manager may automatically disappear after a short pause without requiring a user interaction. For example, the notification manager is configured to notify download completion, give a message notification, and the like. The notification manager may alternatively be a notification that appears in a top status bar of the system in a form of a graph or a scroll bar text, for example, a notification of an application that is run on a background, or may be a notification that appears on the screen in a form of a dialog window. For example, text information is prompted in the status bar, an announcement is given, the electronic device vibrates, or the indicator light blinks.

The runtime includes a kernel library and a virtual machine. The runtime is responsible for scheduling and management of the operating system.

The kernel library includes two parts: a function that needs to be called in Java language, and the kernel library of the operating system. The application layer and the application framework layer are run on the virtual machine. The virtual machine executes Java files of the application layer and the application framework layer as binary files. The virtual machine is configured to implement functions such as object lifecycle management, stack management, thread management, security and exception management, and garbage collection.

The system library may include a plurality of functional modules, for example, a surface manager (surface manager), a media library (media libraries), a three-dimensional graphics processing library (for example, OpenGL ES), a two-dimensional graphics engine (for example, SGL), an image processing library, and the like.

The surface manager is configured to manage a display subsystem and provide fusion of 2D and 3D image layers for a plurality of applications.

The media library supports playback and recording in a plurality of commonly used audio and video formats, and static image files. The media library may support a plurality of audio and video encoding formats, for example, MPEG-4, H.264, MP3, AAC, AMR, JPG, and PNG.

The three-dimensional graphics processing library is configured to implement three-dimensional graphics drawing, image rendering, composition, image layer processing, and the like.

The 2D graphics engine is a drawing engine for 2D drawing.

The kernel layer is a layer between hardware and software. The kernel layer includes at least a display driver, a camera driver, an audio driver, and a sensor driver.

The hardware layer may include various sensors, such as an acceleration sensor, a gyroscope sensor, and a touch sensor.

It should be noted that the structures shown in FIG. 1 and FIG. 2 are merely examples of the electronic device provided in embodiments of this application, and cannot impose any limitation on the electronic device provided in embodiments of this application. During specific implementation, the electronic device may have more or fewer components or modules than those in the structures shown in FIG. 1 or FIG. 2.

The following describes an audio track marking method provided in embodiments of this application.

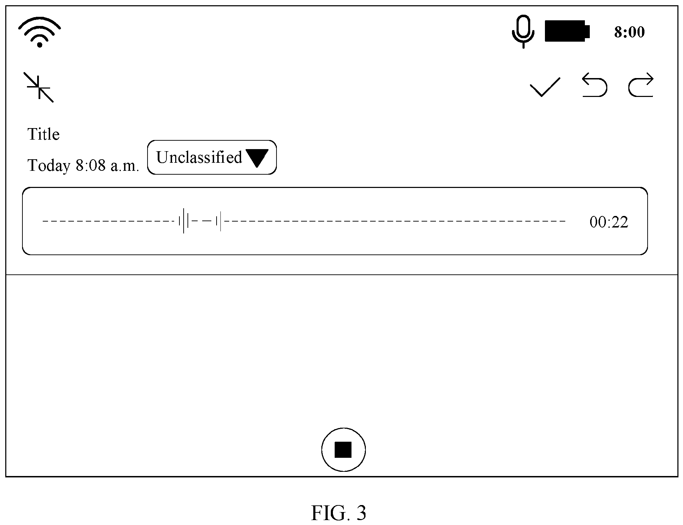

In some embodiments of this application, an electronic device may record audio. For example, a user may trigger the electronic device to record audio. The audio recorded by the electronic device may be displayed in a display interface of the electronic device in a form of an audio track, and different positions in the audio track indicate audio content corresponding to different times. FIG. 3 is a diagram of a display interface in which an electronic device displays an audio track of audio according to an embodiment of this application. Refer to FIG. 3. The electronic device may display an audio track of the recorded audio, and as the audio is recorded, duration of the audio track increases.

In some other embodiments of this application, the electronic device may further play audio. The audio played by the electronic device may alternatively be displayed in the display interface of the electronic device in a form of an audio track. The display interface shown in FIG. 3 may be an audio track of the audio played by the electronic device, and the user may tap a position in the audio track to trigger the electronic device to play content at a time corresponding to the position in the audio.

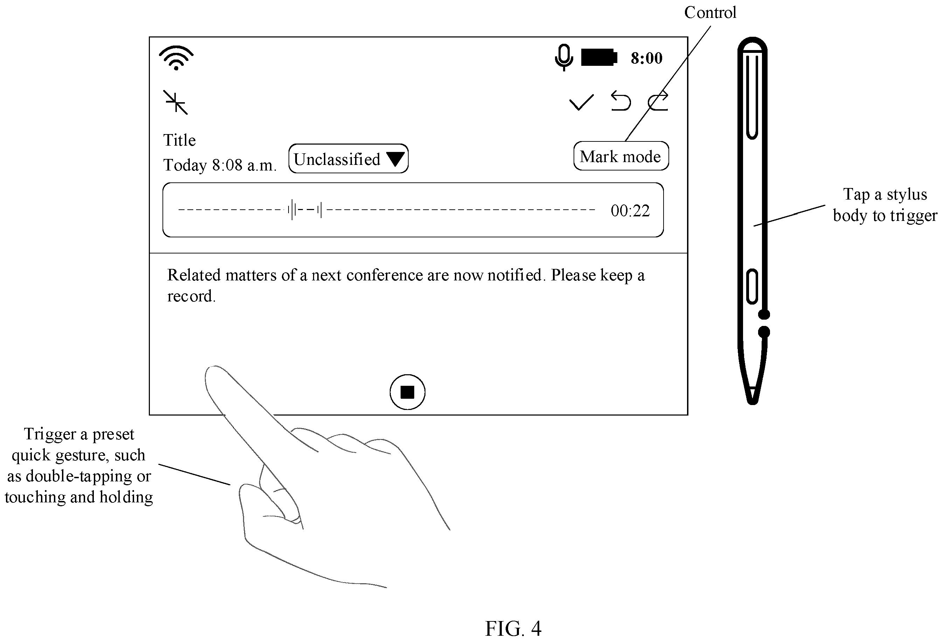

When displaying the audio track in the display interface, the electronic device determines, in response to a first operation triggered by the user, a first position corresponding to the first operation. The first operation may indicate to mark the audio track at the first position in the audio track. FIG. 4 is a diagram in which a user triggers a first operation according to an embodiment of this application. Refer to FIG. 4. The first operation may be a specified gesture triggered by the user. For example, the first operation may be double-tapping a screen or touching and holding a screen. Alternatively, the first operation may be tapping, by the user, a control in the display interface or a keyboard interface. For example, the user may tap a "mark mode" control in the interface shown in FIG. 4, to trigger the first operation. Alternatively, the first operation may be triggered by the user by using a button on a stylus body or by performing a specified gesture on a stylus.

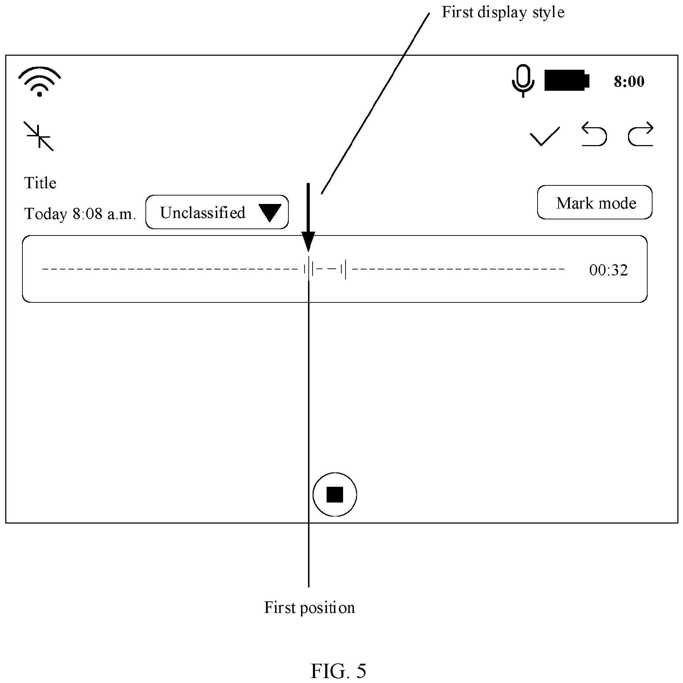

In some implementations of this application, the electronic device may display, in a first display style in response to the first operation triggered by the user, the first position corresponding to the first operation in the audio track. For example, FIG. 5 is a diagram in which a first position mark is displayed according to an embodiment of this application. Refer to FIG. 5. The electronic device determines, in response to the first operation triggered by the user, the first position corresponding to the first operation, and the electronic device displays the first position in the audio track in the first display style. As shown in FIG. 5, the first display style is displaying an arrow icon at the first position.

In some other implementations of this application, after determining the first position corresponding to the first operation, the electronic device may start to mark the audio track at the first position of the audio track, and display audio track after the first position in the first display style. The first display style may be a display style different from a default display style of the audio track. For example, a background color of the first display style may be different from that of the default display style, or an audio track shape, an audio track color, or the like of the first display style may be different from that of the default display style.

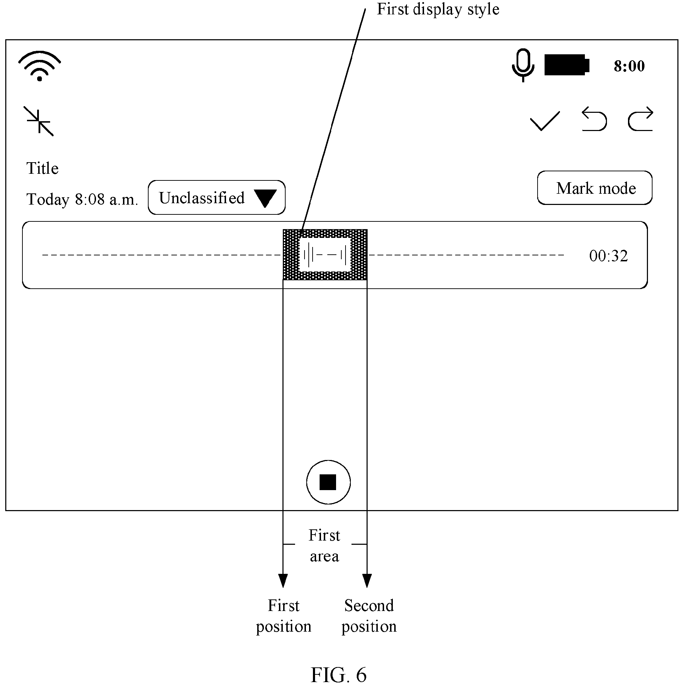

The electronic device determines, in response to a second operation triggered by the user, a second position corresponding to the second operation. The second operation indicates to stop marking the audio track at the second position in the audio track. For example, FIG. 6 is a diagram in which an audio track is displayed according to an embodiment of this application. Refer to FIG. 6. The electronic device displays a first area between the first position and a second position in the audio track in the first display style, and displays another area in the default display style. A background color of the first display style is different from that of the default display style. For a manner of triggering the second operation by the user, refer to the manner of triggering the first operation by the user. Repeated parts are not described again.

It may be understood that, in some implementations, the electronic device may further determine, based on an operation triggered by the user, an area corresponding to the operation in the audio track. For example, if the user triggers a slide operation on the audio track, the electronic device may determine an area corresponding to the slide operation, and mark the area. In other words, an operation manner of triggering, by the user, marking is not limited in this embodiment of this application.

It should be noted that, in a process of recording or playing audio, the electronic device may mark the first area in the audio track in response to the first operation and the second operation that are triggered by the user. During implementation, as the audio is recorded or played, the electronic device may display, in the first display style in response to the first operation triggered by the user, an audio track area located after the first position corresponding to the first operation, and the electronic device stops marking in response to the second operation triggered by the user. Alternatively, the electronic device may determine, in response to the first operation triggered by the user, the first position corresponding to the first operation, determine, in response to the second operation triggered by the user, the second position corresponding to the second operation, and then display, in the first display style, the first area between the first position and the second position. In other words, a manner in which the electronic device displays the first area in the first display style is not limited in this embodiment of this application.

According to the foregoing description, in the audio track marking method provided in this embodiment of this application, the electronic device may mark the first position of the first operation triggered by the user, and may further mark the first area determined based on the first operation and the second operation that are triggered by the user.

In this embodiment of this application, the electronic device may further perform speech transcription on the audio, convert audio content into text content, and display the text content in the display interface. The electronic device may synchronously perform recording and speech transcription, or may perform speech transcription on audio after the electronic device completes recording to obtain the audio.

In an optional implementation, when performing speech transcription on the audio, the electronic device may mark speech transcription content corresponding to the first position in the audio track, and display, in a second display style, the speech transcription content corresponding to the first position. The speech transcription content corresponding to the first position may be speech transcription content of audio corresponding to an audio track area of a preset length that includes the first position, and the first position may be a start position, an end position, or a middle position of the audio track area. The second display style is a display style different from a default display style of the speech transcription content. For example, a font, a text color, a background color, or the like of the second display style is different from that of the default display style of the speech transcription content.

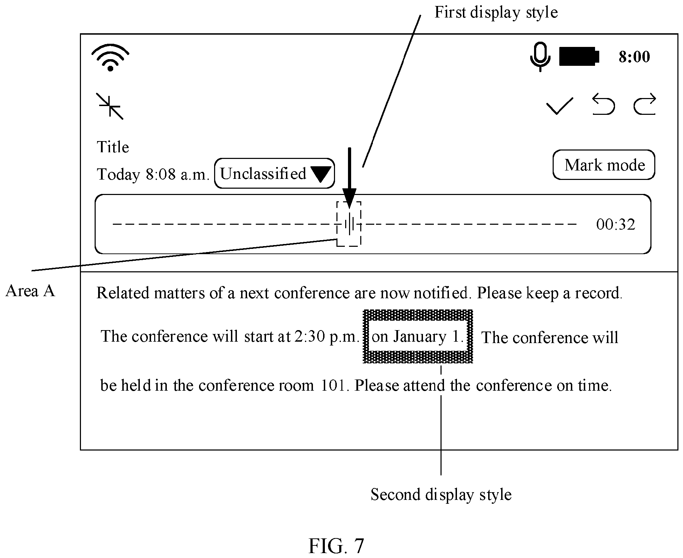

For example, FIG. 7 is a diagram in which speech transcription content corresponding to a first position is marked according to an embodiment of this application. Refer to FIG. 7. The speech transcription content corresponding to the first position may be speech transcription content corresponding to an area A shown in FIG. 7. In FIG. 7, the first position is a middle position of the area A. It may be understood that the first position may alternatively be a start position or an end position of the area A, and the preset length of the area A may be an empirical value of a skilled person. As shown in FIG. 7, the speech transcription content corresponding to the first position is "on January 1", and the electronic device displays, in the second display style, the speech transcription content corresponding to the first position. For example, the background color of the second display style is different from that of the default display style of the speech transcription content.

In another optional implementation, the electronic device may further mark speech transcription content corresponding to the first area in the audio track, and display, in the second display style, the speech transcription content corresponding to the first area. The speech transcription content corresponding to the first area includes speech transcription content of audio corresponding to the first area. The second display style is a display style different from a default display style of the speech transcription content. For example, a font, a text color, a background color, or the like of the second display style is different from that of the default display style of the speech transcription content.

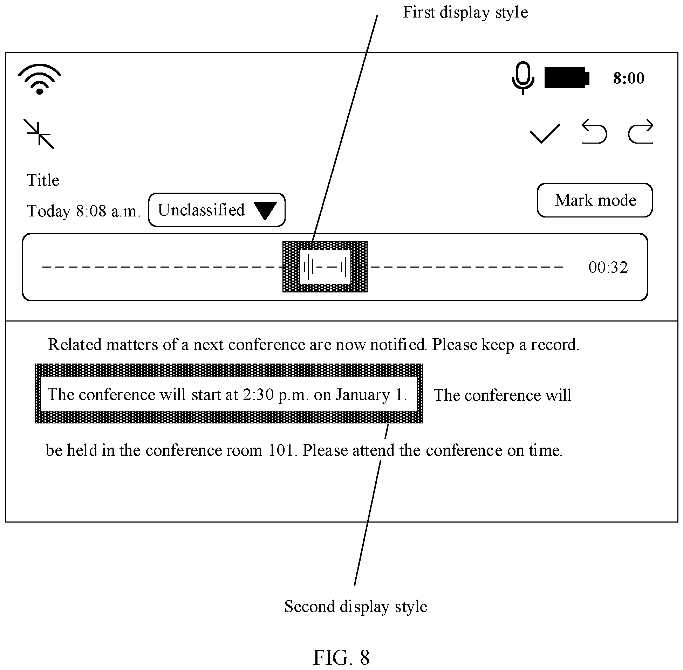

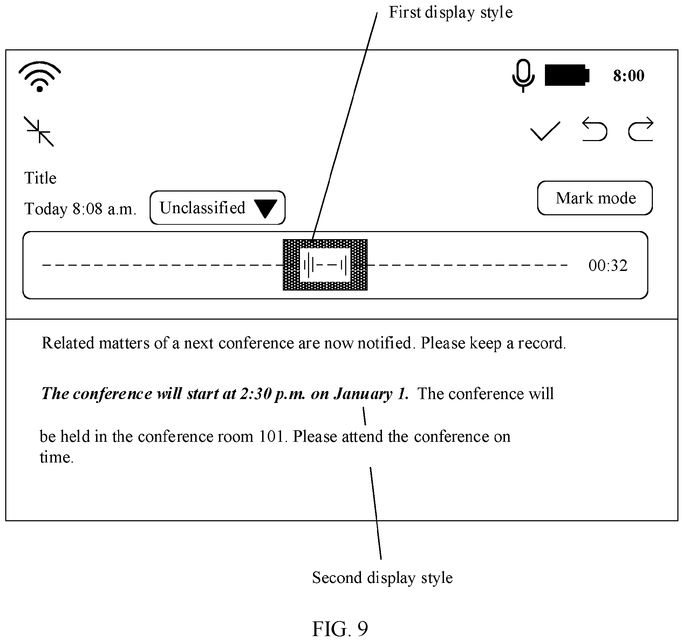

For example, FIG. 8 is a diagram in which speech transcription content corresponding to a first area is marked according to an embodiment of this application. Refer to FIG. 8. The speech transcription content corresponding to the first area is "The conference will start at 2:00 p.m. on January 1", and the electronic device displays, in the second display style, the speech transcription content corresponding to the first area. For example, the background color of the second display style is different from that of the default display style of the speech transcription content. Optionally, the first display style and the second display style may be the same, to indicate a correspondence between the first area in the audio track and the speech transcription content. As shown in FIG. 8, the first display style and the second display style are the same. The first display style may alternatively be different from the second display style. For example, FIG. 9 is a diagram of an interface in which speech transcription is performed on audio according to an embodiment of this application. Refer to FIG. 9. The background color of the first display style may be different from that of the default display style of the audio track, and the font of the second display style is different from that of the default display style of the speech transcription content.

In some embodiments of this application, when the audio track includes a plurality of marked audio track areas, display styles of different audio track areas may be the same or different. In other words, the plurality of marked audio track areas correspond to at least one display style, and the at least one display style may be user-defined. For example, the plurality of marked audio track areas may all be displayed in the first display style, or audio track areas on which marking is triggered by different users may correspond to different display styles.

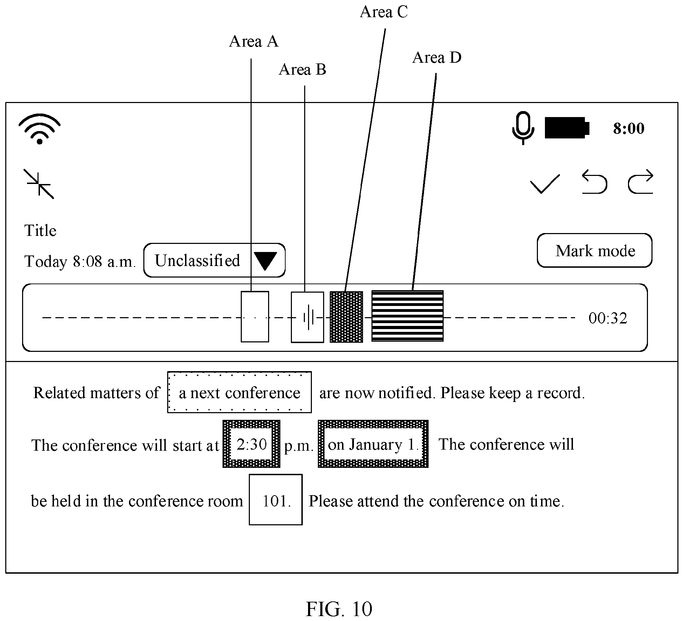

For example, FIG. 10 is a diagram in which an audio track that includes a plurality of marked audio track areas is displayed according to an embodiment of this application. Refer to FIG. 10. In FIG. 10, in the audio track, an area A is an audio track area marked by a user 1, an area B and an area C are audio track areas marked by a user 2, and an area D is an audio track area marked by a user 3. Display styles of the audio track areas on which marking is triggered by different users are different.

In some implementations of this application, the electronic device may add, in response to a third operation triggered by the user, an annotation area at a third position corresponding to the third operation. The third operation may be triggered by the user by using a specified gesture, a control in the display interface, or a stylus. After detecting the third operation triggered by the user, the electronic device may display an annotation editing interface in the display interface, receive annotation content entered by the user in the annotation editing interface, and display the annotation content in an annotation area. Optionally, the annotation content entered by the user in the annotation editing interface includes but is not limited to a text, an image, audio, and a video.

Optionally, the electronic device may display a speech transcription interface and the annotation editing interface in split screen mode, or display a floating window in the speech transcription interface, and display the annotation editing interface in the floating window.

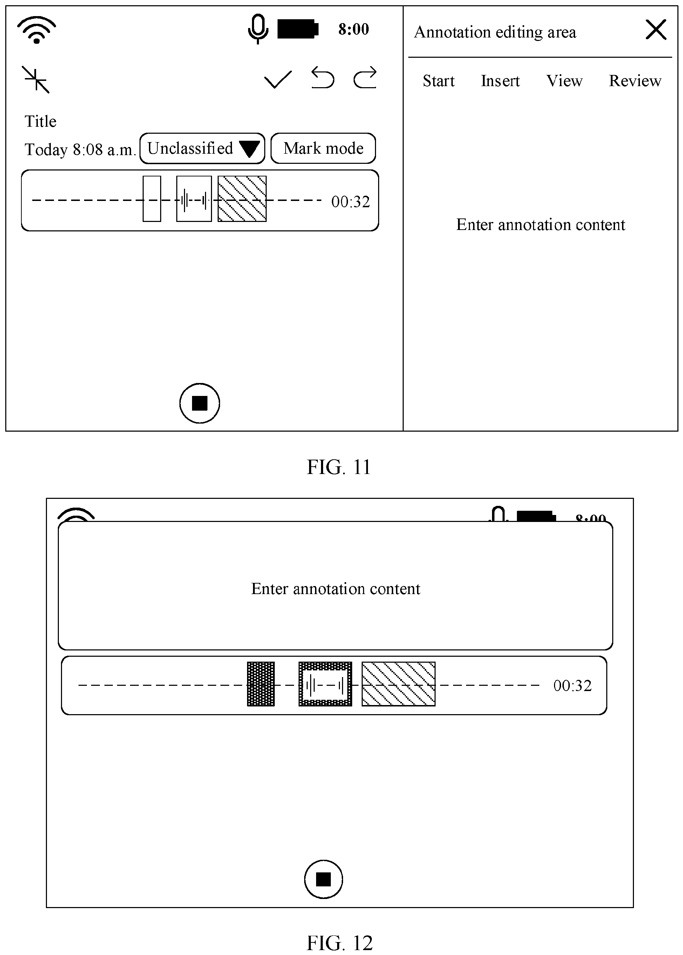

For example, FIG. 11 is a diagram of a first annotation editing interface according to an embodiment of this application. Refer to FIG. 11. The speech transcription interface is displayed in a left area of a display of the electronic device, the annotation editing interface is displayed in a right area of the display of the electronic device, and the user may enter annotation content in the annotation editing interface.

For another example, FIG. 12 is a diagram of another annotation editing interface according to an embodiment of this application. Refer to FIG. 12. When displaying the speech transcription interface, the electronic device may display, in response to the third operation triggered by the user, one floating window in the speech transcription interface, and display an annotation editing interface in the floating window. The user may enter annotation content in the annotation editing interface.

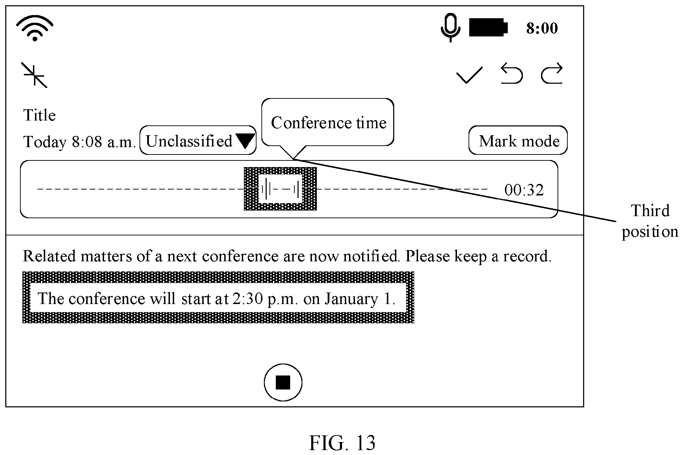

After receiving the annotation content entered by the user, the electronic device may display an annotation at the third position corresponding to the third operation. Optionally, the electronic device may display the annotation after the user taps the third position, and hide the annotation after the user taps another position other than the third position in the display interface. Alternatively, the electronic device may continuously display the annotation at the third position. For example, FIG. 13 is a diagram in which an annotation is displayed above an audio track according to an embodiment of this application. Refer to FIG. 13. After the user enters a text "conference time" in the annotation editing area shown in FIG. 11 or FIG. 12, the electronic device may display, at the third position, an annotation that includes the text "conference time", to annotate key content. This facilitates searching for audio content or speech transcription content by the user.

In some embodiments, after detecting the third operation triggered by the user, the electronic device may display the audio track at the third position in a third display style, and the third display style is different from the first display style, so that an audio track area to which the user adds an annotation is distinguished from an audio track area to which the user does not add an annotation.

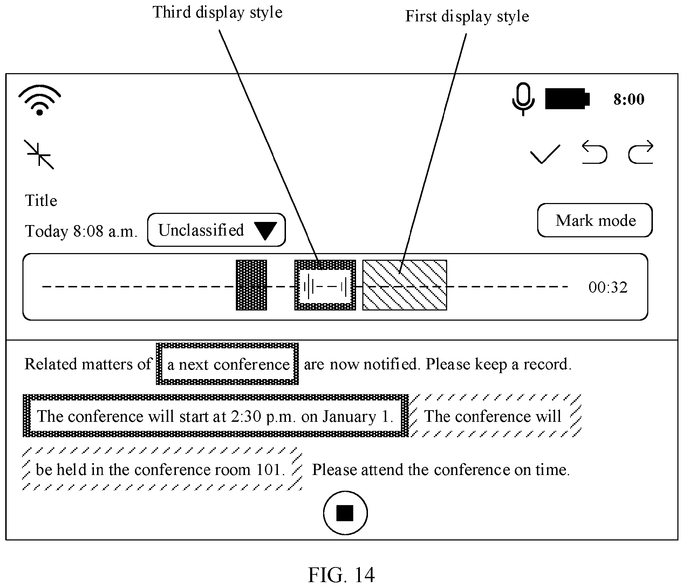

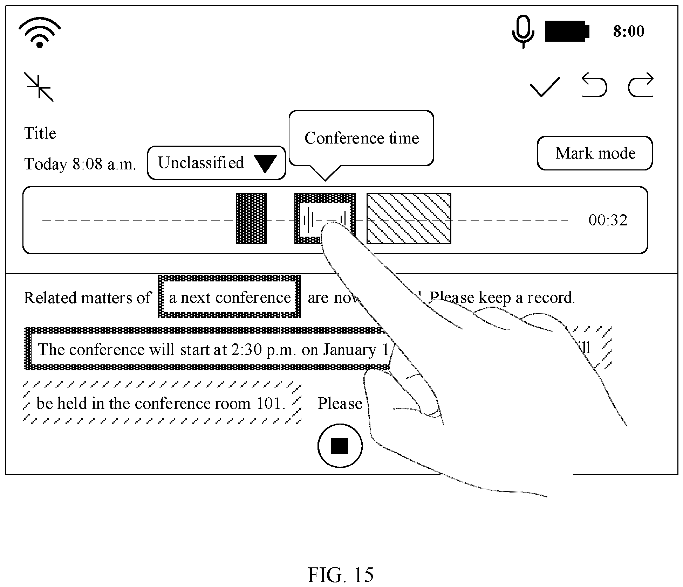

For example, FIG. 14 is a diagram of a mark display style according to an embodiment of this application. Refer to FIG. 14. An audio track area in the third display style indicates that the user adds an annotation to the area, and an audio track area in the first display style indicates that the user marks the area but does not add an annotation to the area. It can be seen from FIG. 14 that, a display style of an audio track area is consistent with a display style of speech transcription content corresponding to the audio track area, so that a correspondence between the audio track area and the speech transcription content can be indicated. In FIG. 14, an annotation is hidden when the user does not tap an audio track area to which the annotation is added. FIG. 15 is a diagram in which an annotation above an audio track is displayed according to an embodiment of this application. Refer to FIG. 15. After the user taps the audio track area to which the annotation is added, the electronic device may display, above the audio track area, the annotation added by the user.

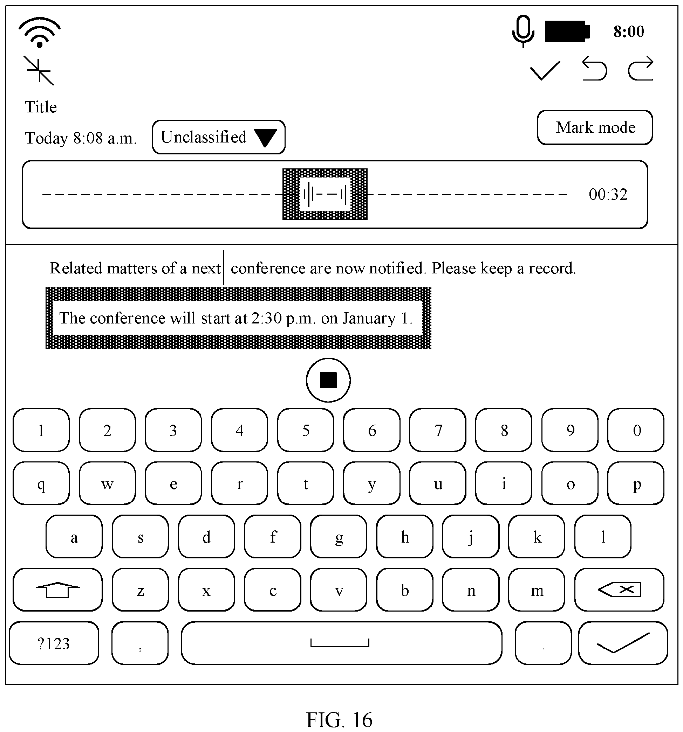

In addition, in the audio track marking method provided in this embodiment of this application, the user may edit the speech transcription content at any time. For example, FIG. 16 is a diagram of an interface in which speech transcription content is edited according to an embodiment of this application. Refer to FIG. 16. The electronic device may display a keyboard interface in the display interface, and the user may edit the speech transcription content by using the keyboard interface. For example, the user performs an operation such as deleting, modifying, or adding a text. Certainly, the user may further edit the speech transcription content by using a stylus. A manner of editing the speech transcription content is not limited in this embodiment of this application.

In some embodiments of this application, when displaying the speech transcription interface, the electronic device may further display a minutes editing interface in split screen mode, and the user may edit minutes in the minutes editing interface. Optionally, the minutes editing interface may include target speech transcription content and/or a play control corresponding to the target speech transcription content. The target speech transcription content includes speech transcription content corresponding to a marked audio track area and/or speech transcription content corresponding to an annotated audio track area. When the play control corresponding to the speech transcription content is displayed in the minutes editing interface, after the user taps the play control corresponding to the speech transcription content, the electronic device may play an audio clip corresponding to the speech transcription content.

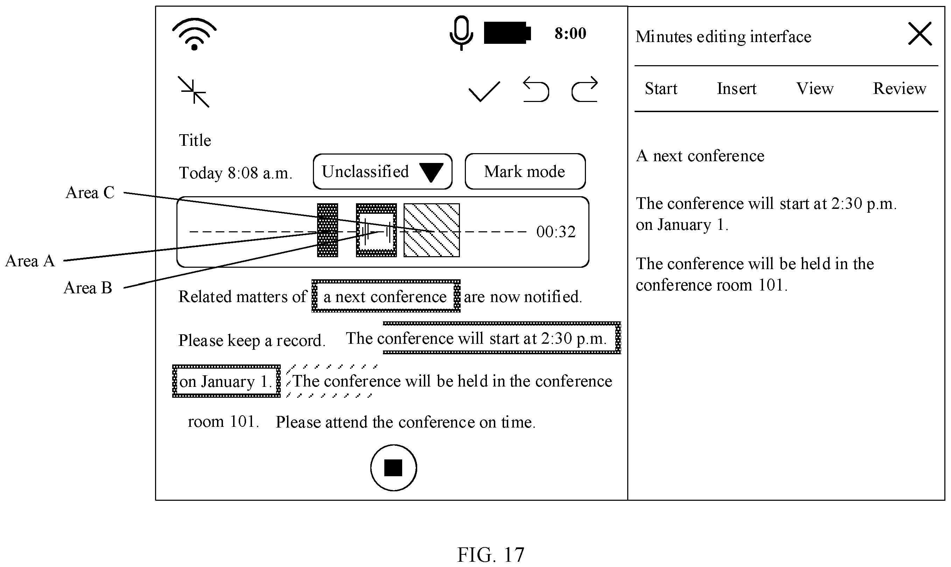

For example, FIG. 17 is a diagram in which a minutes editing interface is displayed according to an embodiment of this application. Refer to FIG. 17. The speech transcription interface is displayed in a left area of the display of the electronic device, and the minutes editing interface is displayed in a right area of the display of the electronic device. After the user triggers, in the speech transcription interface, the second operation of ending marking or the third operation of adding an annotation, the electronic device may display, in the minutes editing interface, speech transcription content corresponding to the marked audio track area and speech transcription content corresponding to the annotated audio track area in the audio track. As shown in FIG. 17, the user triggers the electronic device to add an annotation to an area A and an area B, and marks an area C. The electronic device displays, in the minutes editing interface, speech transcription content corresponding to the area A "A next conference", speech transcription content corresponding to the area B "The conference will start at 2:30 p.m. on January 1", and speech transcription content corresponding to the area C "The conference will be held in 101", and the user may edit the minutes in the minutes editing interface. The electronic device displays, in the minutes editing interface, speech transcription content corresponding to an audio track area to which the user adds an annotation or mark, so that the user can directly use the content to edit minutes. This facilitates a user operation and improves user experience.

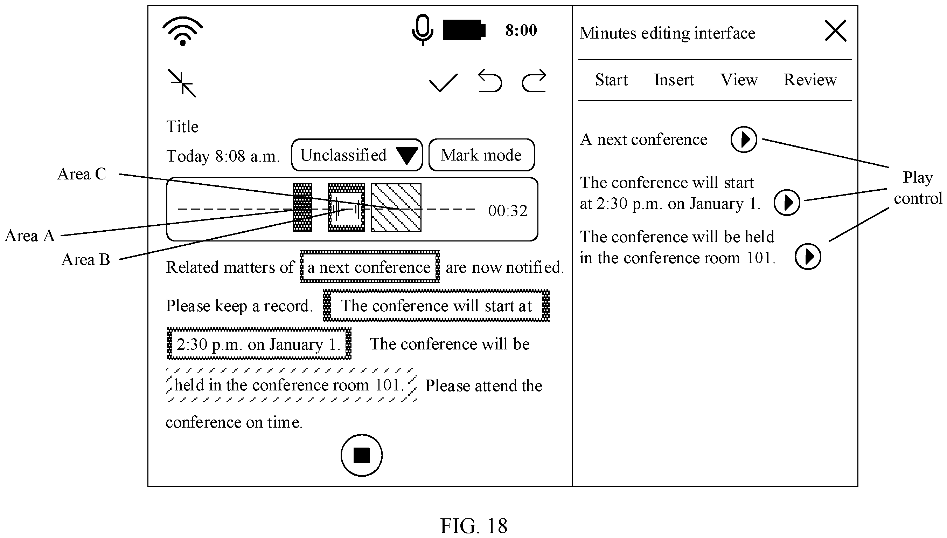

For another example, FIG. 18 is a diagram in which another minutes editing interface is displayed according to an embodiment of this application. Refer to FIG. 18. The electronic device displays, in the minutes editing interface, the speech transcription content "A next conference" corresponding to the area A, the speech transcription content "The conference will start at 2:30 p.m. on January 1" corresponding to the area B, and the speech transcription content "The conference will be held in 101" corresponding to the area C in the audio track, and the electronic device displays a play control located after each speech transcription content. After the user taps the play control located after "The conference will start at 2:30 p.m. on January 1", the electronic device plays an audio clip corresponding to the area B in the audio track. According to this design, the user can repeatedly listen to audio content corresponding to a marked audio track area at any time. This improves user experience.

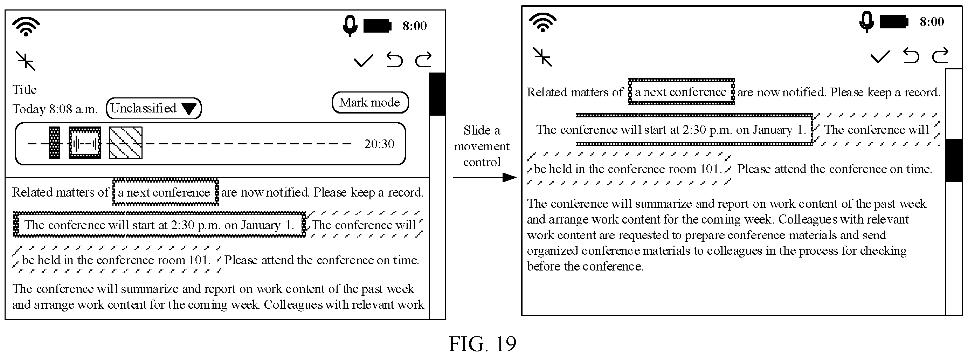

It should be noted that the accompanying drawings of the display interfaces in the foregoing embodiments are merely used as examples rather than limitations, and the display interfaces may alternatively have other display forms. For example, when there is a relatively large quantity of speech transcription content, the electronic device may display a sliding control, and the user may control the sliding control to move, to view speech transcription content that is not displayed in a current interface. For example, FIG. 19 is a diagram in which speech transcription content is displayed according to an embodiment of this application. Refer to FIG. 19. When there is a relatively large quantity of speech transcription content, and the electronic device cannot completely display all content in one interface, the user may trigger a movement operation on a sliding control in a right side of the display interface, and the electronic device adjusts, based on a distance of the movement operation triggered by the user, speech transcription content displayed in a current display interface, to facilitate viewing by the user.

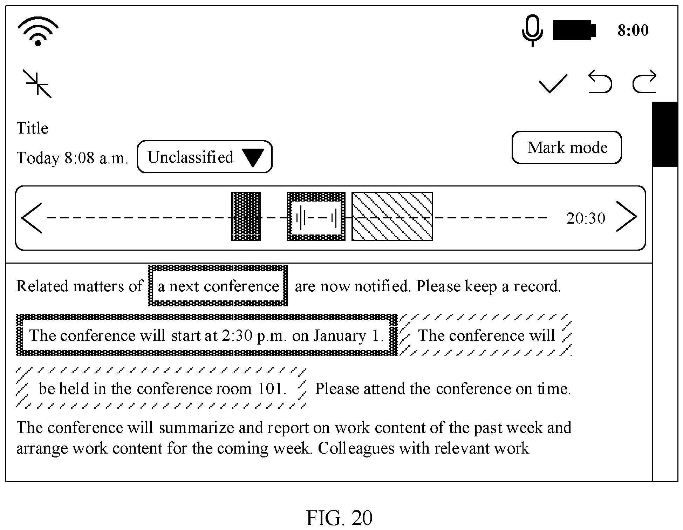

For another example, this embodiment of this application further provides two audio track display manners of audio. FIG. 20 is a diagram of a first audio track display manner according to an embodiment of this application. Refer to FIG. 20. The electronic device may display a moving control in an audio track display area. A left moving control may control the audio track to move leftward, and a right moving control may control the audio track to move rightward. The electronic device may display different areas of the audio track in response to an operation triggered by the user on the moving control.

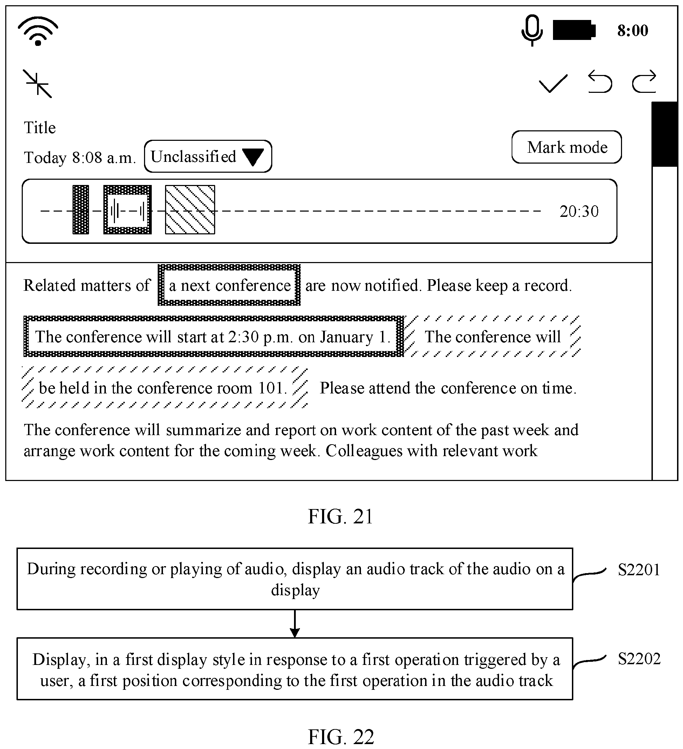

FIG. 21 is a diagram of another audio track display manner according to an embodiment of this application. Refer to FIG. 21. The electronic device may compress and display an audio track of audio whose duration is 20:30 in a current interface. The user may tap the audio track to trigger playing of audio at a tapped position, or the user may drag a progress bar on the audio track to select audio to be played.

Based on the foregoing embodiments, this application further provides an audio track marking method. The method may be performed by an electronic device, and the electronic device may have a structure shown in FIG. 1 and/or FIG. 2. FIG. 22 is a flowchart of an audio track marking method according to an embodiment of this application. Refer to FIG. 22. The method includes the following steps.

S2201: During recording or playing of audio, display an audio track of the audio on a display.

S2202: Display, in a first display style in response to a first operation triggered by a user, a first position corresponding to the first operation in the audio track.

The first operation indicates to mark the first position in the audio track.

It should be noted that, for specific implementation of the audio track marking method shown in FIG. 22 in this application, reference may be made to the foregoing embodiments of this application. Repeated parts are not described again.

Based on the foregoing embodiments, this application further provides an electronic device. The electronic device includes a plurality of functional modules. The plurality of functional modules interact with each other to implement functions performed by the electronic device in the methods described in embodiments of this application. The plurality of functional modules may be implemented based on software, hardware, or a combination of software and hardware, and the plurality of functional modules may be randomly combined or divided based on specific implementation.

Based on the foregoing embodiments, this application further provides an electronic device. The electronic device includes at least one processor and at least one memory. The at least one memory stores computer program instructions. When the electronic device is run, the at least one processor performs functions performed by the electronic device in the methods described in embodiments of this application.

Based on the foregoing embodiments, this application further provides a computer program product that includes instructions. When the computer program product is run on a computer, the computer is enabled to perform the methods described in embodiments of this application.

Based on the foregoing embodiments, this application further provides a computer-readable storage medium. The computer-readable storage medium stores a computer program. When the computer program is executed by a computer, the computer is enabled to perform the methods described in embodiments of this application.

Based on the foregoing embodiments, this application further provides a chip. The chip is configured to read a computer program stored in a memory, to implement the methods described in embodiments of this application.

Based on the foregoing embodiments, this application provides a chip system. The chip system includes a processor, configured to support a computer apparatus in implementing the methods described in embodiments of this application. In a possible design, the chip system further includes a memory, and the memory is configured to store a program and data that are necessary for the computer apparatus. The chip system may include a chip, or may include a chip and another discrete component.

A person skilled in the art should understand that embodiments of this application may be provided as a method, a system, or a computer program product. Therefore, this application may use a form of a hardware-only embodiment, a software-only embodiment, or an embodiment with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

The computer program instructions may alternatively be stored in a computer-readable memory that can indicate a computer or another programmable data processing device to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

The computer program instructions may alternatively be loaded onto a computer or another programmable data processing device, so that a series of operations and steps are performed on the computer or the another programmable device, to generate computer-implemented processing. Therefore, the instructions executed on the computer or the another programmable device provide steps for implementing a specific function in one or more procedures in the flowcharts and/or in one or more blocks in the block diagrams.

It is clear that a person skilled in the art can make various modifications and variations to this application without departing from the scope of this application. This application is intended to cover these modifications and variations of this application provided that they fall within the scope of protection defined by the following claims and their equivalent technologies.

## Claims

1. An audio track marking method, wherein the method comprises:
during recording or playing of audio, displaying an audio track of the audio on a display; and
displaying, in a first display style in response to a first operation triggered by a user, a first position corresponding to the first operation in the audio track, wherein
the first operation indicates to mark the first position in the audio track.

2. The method according to claim 1, wherein after the displaying, in a first display style in response to a first operation triggered by a user, a first position corresponding to the first operation in the audio track, the method further comprises:
displaying, in the first display style in response to a second operation triggered by the user, a first area between the first position and a second position corresponding to the second operation in the audio track, wherein
the second operation indicates to end marking at the second position in the audio track, and the second position is after the first position.

3. The method according to claim 1, wherein the method further comprises:
performing speech transcription on the audio, and displaying speech transcription content corresponding to the audio; and
displaying, in a second display style, speech transcription content corresponding to the first position in the speech transcription content.

4. The method according to claim 2, wherein the method further comprises:
performing speech transcription on the audio, and displaying speech transcription content corresponding to the audio; and
displaying, in a second display style, speech transcription content corresponding to the first area in the speech transcription content.

5. The method according to any one of claims 1 to 4, wherein the first display style comprises at least one of the following:
a background color different from that of a default display style of the audio track;
an audio track shape different from that of the default display style of the audio track; and
an audio track color different from that of the default display style of the audio track.

6. The method according to claim 3 or 4, wherein the second display style comprises at least one of the following:
a font different from that of a default display style of the speech transcription content;
a text color different from that of the default display style of the speech transcription content; and
a background color different from that of the default display style of the speech transcription content.

7. The method according to any one of claims 1 to 6, wherein the method further comprises:
in response to a third operation triggered by the user, adding an annotation area at a third position corresponding to the third operation; and
displaying an annotation editing interface on the display, receiving annotation content entered by the user in the annotation editing interface, and displaying the annotation content in the annotation area.

8. The method according to claim 7, wherein the method further comprises:
displaying the third position in the audio track in a third display style.

9. The method according to claim 7 or 8, wherein the displaying an annotation editing interface on the display comprises:
displaying a speech transcription interface and the annotation editing interface on the display in split screen mode; or
displaying a floating window in a speech transcription interface displayed on the display, and displaying the annotation editing interface in the floating window, wherein
the speech transcription interface comprises the audio track of the audio and the speech transcription content corresponding to the audio.

10. The method according to any one of claims 1 to 6, wherein the method further comprises:
displaying a speech transcription interface and a minutes editing interface on the display in split screen mode, wherein
the speech transcription interface comprises the audio track of the audio and the speech transcription content corresponding to the audio, and the minutes editing interface comprises target speech transcription content and/or a play control corresponding to the target speech transcription content; and the target speech transcription content comprises speech transcription content corresponding to a marked audio track area and/or speech transcription content corresponding to an annotated audio track area in the audio track, and the play control corresponding to the target speech transcription content is used to play an audio clip corresponding to the target speech transcription content.

11. The method according to any one of claims 1 to 10, wherein
when the audio track comprises a plurality of marked audio track areas, the plurality of marked audio track areas correspond to at least one display style, and the at least one display style is user-defined.

12. The method according to any one of claims 3 to 11, wherein the method further comprises:
in response to a movement operation triggered by the user on a sliding control in a display interface, adjusting, based on a distance corresponding to the movement operation, speech transcription content displayed in the display interface.

13. An electronic device, comprising at least one processor, wherein the at least one processor is coupled to at least one memory, and the at least one processor is configured to read a computer program stored in the at least one memory, to perform the method according to any one of claims 1 to 12.

14. An electronic device, comprising a plurality of functional modules, wherein the plurality of functional modules interact with each other, to implement the method according to any one of claims 1 to 12.

15. A computer-readable storage medium, wherein the computer-readable storage medium stores instructions, and when the instructions are run on a computer, the computer is enabled to perform the method according to any one of claims 1 to 12.

16. A computer program product comprising instructions, wherein when the computer program product is run on a computer, the computer is enabled to perform the method according to any one of claims 1 to 12.
